# EUROPÄISCHE PATENTSCHRIFT

(11) **EP 1 593 895 B1**
(45) Veröffentlichungstag und Bekanntmachung des Hinweises auf die Patenterteilung: **06.06.2012**
(21) Anmeldenummer: 05009560.3
(22) Anmeldetag: 30.04.2005
(51) Int. Cl.: F16L 5/08

(54) **Abdichtelement**
Sealing element
Elément d'étanchéité

(30) Priorität: 06.05.2004 DE 102004009849
(43) Veröffentlichungstag der Anmeldung: 09.11.2005
(73) Patentinhaber: gabo Systemtechnik GmbH, 94559 Niederwinkling (DE)
(72) Erfinder: Bauer, Peter, 94357 Konzell (DE); Lederer, Roland, 94374 Schwarzach (DE); Markus, Karl, 94327 Bogen (DE)
(74) Vertreter: Cohausz & Florack

(56) Entgegenhaltungen:
- DE-U1- 8 909 103
- DE-U1- 29 906 645

## Beschreibung

Die Erfindung betrifft ein Abdichtelement zur abdichtenden Durchführung eines Kabels, Kabelschutzrohres oder einer sonstigen Leitung durch eine Mauer, mit einer Grundplatte und mindestens einer Spannplatte, wobei zwischen der Grundplatte und der mindestens einen Spannplatte ein zusammen mit der Spannplatte in eine Maueröffnung einsetzbares Dichtelement angeordnet ist, welches im in die Maueröffnung eingesetzten Zustand mittels Spannstangen zwischen der Grundplatte und der Spannplatte verpreßbar ist, und wobei in der Grundplatte eine Öffnung für das durch die Mauer durchzuführende Kabel oder Kabelschutzrohr vorgesehen ist.

Abdichtelemente dieser Art sind auch als Mauerdurchführungen für Kabel und/oder Kabelschutzrohre bekannt. Sie dienen dazu, im Erdreich verlegte Kabel bzw. Kabelschutzrohre, die in das Innere von Gebäuden zu leiten sind, gegen das Eindringen von Feuchtigkeit bzw. Wasser abzudichten. Dabei wird der Raum zwischen den Kabeln bzw. dem Kabelschutzrohr oder sonstigen Leitungsrohren einerseits und dem Bauwerk andererseits durch Abdichtelemente verschlossen. Sie bestehen meistens aus zwei starren, ringförmigen Platten zwischen denen ein Dichtstoff verpresst ist.

Es sind bereits unterschiedliche solcher Abdichtelemente vorgeschlagen worden. So zeigt z.B. die DE 101 37 694 C1 eine Mauerdurchführung für Kabel und Kabelschutzrohre, die im Wesentlichen geradlinig durch die Mauer des Gebäudes führt und nach dem Mauerdurchtritt endet. Im Falle der Durchführung einer Gasleitung etwa, endet diese nach dem Durchtritt, etwas verlängert, durch einen aufgesetzten, einseitig offenen Rohrstutzen.

Auch die Druckschriften der Firma Hauff-Technik GmbH & Co. KG: "Mehrspartenhauseinführung MSH 2000 PLUS Systemtechnik" (02.07.01 Wo) zeigen solche Abdichtelemente und Mauerdurchführungen, ebenso wie die Hauseinführung "Curaflex Kombination 3100" der Firma DOYMA gemäß deren Listenblatt S. 311.

Sämtliche dieser Hauseinführungen berücksichtigen nicht, dass die Kabel bzw. Rohre nach dem senkrechten Eintritt in das Gebäude abgebogen werden müssen und dabei, besonders bei zu kleinen Radien oder scharfkantigen Öffnungen der Bohrungen oder des Mauerdurchbruches, beschädigt werden können. Dies trifft besonders für Glasfaserkabel zu, deren empfindliche Fasern bei zu engen Radien brechen oder an scharfkantigen Öffnungen reißen können. Bei Gas- und Wasserrohren kann bei Unterscheiten eines kleinsten Biegeradius das Rohr brechen, sodass Gas bzw. Wasser austreten und Schäden am Gebäude verursachen.

Die DE 299 06 645 U1 zeigt eine Vorrichtung zum abgedichteten Durchführen einer Leitung durch einen in einer Wand ausgebildeten Durchbruch, insbesondere zur gas- und flüssigkeitsdichten Durchführung von Kabeln. Die Vorrichtung umfasst mindestens ein zwischen einer Innenfläche des Durchbruchs und einer Außenfläche der Leitung platzierbares, verformbares Dichtelement, eine Spanneinrichtung zum Verspannen und abdichtenden Verpressen des Dichtelements und mindestens ein die durchzuführende Leitung aufnehmendes Hülsrohr. Das Hülsrohr weist dabei mindestens einen Vorsprung und/oder eine Ausnehmung auf, der bzw. die mit der Spanneinrichtung und/oder dem Dichtelement im montierten Zustand in einer formschlüssigen Verbindung steht. Die Spanneinrichtung ist dabei aus zwei formstabilen Spannplatten gebildet, zwischen denen das verformbare Dichtelement angeordnet ist und die mittels Spannbolzen verspannbar sind. An einer der Spannplatten, und zwar an der außerhalb des Durchbruchs angeordneten Spannplatte ist ein sich trichterförmig erweiterndes Stützringelement zum Abstützen der Leitung angeordnet. Das Stützringelement dient dabei jedoch nicht einer gewollten Umlenkführung der Leitung.

Die DE 89 09 103 U 1 offenbart eine Wanddurchführung für Kabel oder Leitungen, bestehend aus einem in einen Mauerdurchbruch einsetzbaren hohlen Bauteil sowie zwei die Enden des hohlen Bauteils dichtend abschließenden Flanschen mit einem Flanschteller mit mindestens einer Durchgangsöffnung für das durchzuführende Kabel bzw. die durchzuführende Leitung. An der innerhalb des Gebäudes gelegenen Durchgangsöffnung ist ein flexibler Übergangsschlauch angebracht. Der Übergangsschlauch besteht aus Kunststoff und ist in die Durchgangsöffnung des ebenfalls aus Kunststoff bestehenden Flanschtellers eingeschweißt oder eingeklebt. Die Durchgangsöffnung ist dabei exzentrisch in dem Flanschteller angeordnet, wobei der Flanschteller an dem hohlen Bauteil um dessen Längsachse drehbar befestigt ist. Nachteilig ist bei dieser bekannten Wanddurchführung insbesondere die relativ scharfkantige Durchgangsöffnung des Flanschtellers. Zum einen ist am Übergang der Durchgangsöffnung des Flanschtellers zu dem hohlen Bauteil ein relativ scharfkantiger Absatz vorhanden, an dem es leicht zu einer Beschädigung des Kabels kommen kann, insbesondere dann, wenn es sich um ein empfindliches Kabel, wie etwa ein Glasfaserkabel handelt. Eine scharfkantige Belastung des Kabels ist zudem an der Außenkante der Durchgangsöffnung des Flanschtellers vorhanden, da der dort eingeschweißte oder eingeklebte Übergangsschlauch ein flexibler Schlauch ist, der eine scharfe Umlenkung des Kabels, insbesondere ein Unterscheiten eines kleinsten kritischen Biegeradius des Kabels nicht verhindert.

Der vorliegenden Erfindung liegt die Aufgabe zugrunde, ein Abdichtelementbzw. eine Mauerdurchführung für Kabel, Glasfaserkabel, diverse Leitungen und sonstige Energieleitungen zu schaffen, das/die die Nachteile der bekannten Einrichtungen dieser Art mit Sicherheit vermeidet und auf der Innenseite eines Gebäudes eine geringstmögliche Abbiegung solcher Leitungen gestattet ohne diese zu beschädigen, wobei einerseits der Zwischenraum zwischen den Leitungen und dem Bauwerk zuverlässig abgedichtet ist und andererseits im Inneren des Gebäudes wenig Raum beansprucht wird.

Diese Aufgabe wird durch das erfindungsgemäße Abdichtelement mit den Merkmalen des Anspruchs 1 gelöst.

Die mit der Erfindung erzielten Vorteile liegen insbesondere in der einwandfreien Abdichtung der in das Gebäude geführten Leitungen und der geführten Umlenkung dieser Leitungen, ohne den zulässige Biegeradius der Leitungen zu unterschreiten, wobei im Inneren des Gebäudes nur äußerst wenig Raum beansprucht wird. Ein besonderer Vorteil ist darin zu sehen, dass die Rohrführung in Form einer Halbschale des Bogenelementes bereits innerhalb des zylindrischen Teiles des Abdichtelementes, das die Mauer etwa senkrecht durchdringt, beginnt, wodurch die Umlenkung der Leitung bereits innerhalb desselben beginnt und eine noch größere Raumersparnis durch geringeren Platzbedarf innerhalb des Gebäudes erzielt wird.

Die Erfindung wird nachstehend anhand einer Abbildung, die ein Ausführungsbeispiel des erfindungsgemäßen Abdichtelements im Schnitt zeigt, näher erläutert:

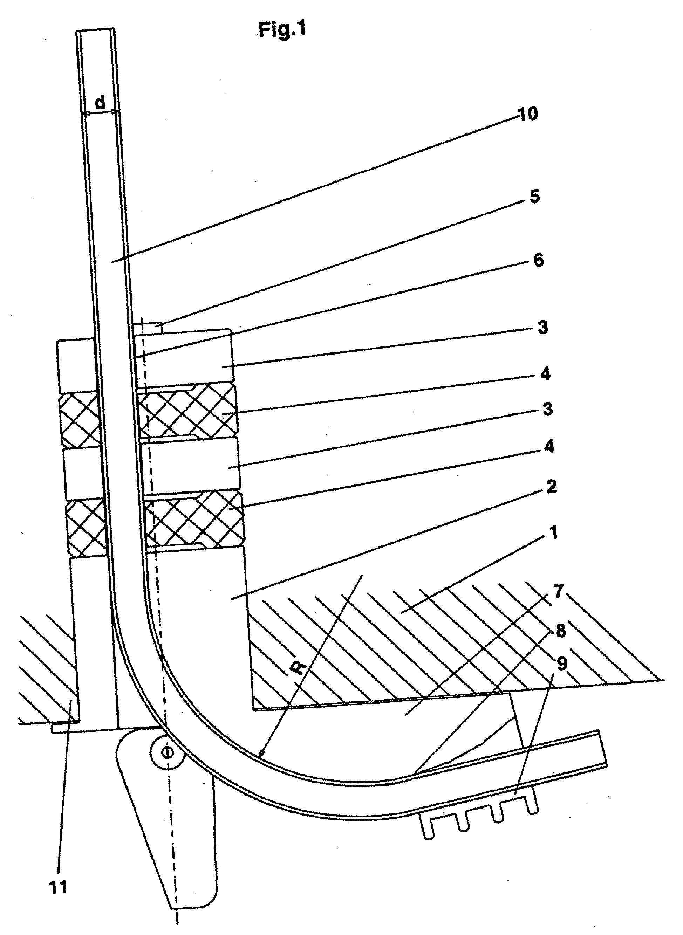

Das in Figur 1 dargestellte Abdichtelement 1 besteht im Wesentlichen aus mindestens einer Spannplatte 3, mindestens einem Dichtelementen 4, einer Grundplatte 2 und den Spannstangen 5.

Das Dichtelement 1 ist in einer beispielsweise zylindrischen Öffnung der Mauer 11 eingesetzt und mittels der Spannstangen 5 verpresst, wodurch eine Abdichtung des Kabels/ Schutzrohr bzw. sonstiger Leitungen 10 gegen die Mauer 11 erzielt wird. Dabei ist das Kabel etc. 10 durch die Öffnung 6 im Dichtelement 4 geführt. Seitlich an der Grundplatte 2 befindet sich ein Bogenelement 7, das entweder im Urformprozess zusammen mit der Grundplatte 2 hergestellt sein kann oder als separates Teil mit der Grundplatte 2 verbunden ist. Dieses Bogenelement 7 ist im jeweils kleinsten zulässigen Biegeradius R des Kabels etc. ausgebildet und besitzt eine halbschalenförmige Rohrführung 8, die das eingelegte Kabel etc. um mehr als 90° umfassen kann. Am Ende des Bogenelementes 7 befindet sich eine Halterung 9 für das Kabel etc. in der dasselbe fixiert ist. Die Halterung 9 kann beispielsweise Teil des Bogenelementes sein oder auch als separates Teil um das Bogenelement 7 und das Kabel etc. 10 gelegt werden.

Die Öffnung 6 ist vorzugsweise zylindrisch ausgebildet, ebenso wie die Maueröffnung und das darin einzusetzende Abdichtelement 1. Die Öffnung 6 ist meist in der Mittelachse des Abdichtelementes 1 geführt, sie kann aber auch außerhalb derselben vorgesehen sein, dann aber parallel dazu.

Der Radius R des Bogenelementes 7 soll zwischen dem 5- und 20-fachen des Durchmessers (d) der Öffnung 6 betragen, und so die Mindestbiegeradien der Kabel, Kabelschutzrohre und sonstigen Rohre berücksichtigen zu können. Insbesondere Glasfaserkabel und Kunststoffrohre reagieren auf die Unterschreitung der Mindestbiegeradien äußerst empfindlich.

Das Abdichtelement 1 ist vorzugsweise ganz oder teilweise aus Kunststoff hergestellt. Es können dafür jedoch auch andere Werkstoffe vorgesehen werden.

### Bezugszeichenliste

- 1: Abdichtelement
- 2: Grundplatte
- 3: Spannplatte
- 4: Dichtelement
- 5: Spannstange
- 6: Öffnung
- 7: Bogenelement
- 8: Halbschale (Rohrführung)
- 9: Halterung
- 10: Kabel, Schutzrohr oder sonstige Leitung
- 11: Mauerwerk

## Patentansprüche

1. Abdichtelement (1) zur abdichtenden Durchführung eines Kabels, Kabelschutzrohres (10) oder einer sonstigen Leitung durch eine Mauer (11), mit einer Grundplatte (2) und mindestens einer Spannplatte (3), wobei zwischen der Grundplatte (2) und der mindestens einen Spannplatte (3) ein zusammen mit der Spannplatte (3) in eine Maueröffnung einsetzbares Dichtelement (4) angeordnet ist, welches im in die Maueröffnung eingesetzten Zustand mittels Spannstangen (5) zwischen der Grundplatte (2) und der Spannplatte (3) verpreßbar ist, und wobei in der Grundplatte (2) eine Öffnung (6) für das durch die Mauer (11) durchzuführende Kabel oder Kabelschutzrohr (10) vorgesehen ist, **dadurch gekennzeichnet, dass** die Grundplatte (2) seitlich mit einem eine Rohrführung (8) aufweisenden Bogenelement (7) versehen ist, dessen Radius (R), je nach eingelegtem Kabel oder Kabelschutzrohr (10) zwischen dem 5-fachen und 20-fachen Durchmesser (d) der Öffnung (6) der Grundplatte (2) liegt, wobei diese Öffnung (6) tangential in das Bogenelement (7) mündet, und wobei die Rohrführung (8) in Form einer gebogenen Halbschale ausgebildet ist, die innerhalb eines in die Maueröffnung einzusetzenden Teiles der Grundplatte (2) beginnt.

2. Abdichtelement nach Anspruch 1, **dadurch gekennzeichnet, dass** das Bogenelement (7) zusammen mit der Grundplatte (2) im Urformprozess hergestellt ist.

3. Abdichtelement nach Anspruch 1, **dadurch gekennzeichnet, dass** das Bogenelement (7) als separates Bauteil mit der Grundplatte (2) verbunden ist.

4. Abdichtelement nach einem der Ansprüche 1 bis 3, **dadurch gekennzeichnet, dass** die als gebogene Halbschale ausgebildete Rohrführung (8) derart ausgebildet ist, dass sie das Kabel oder Kabelschutzrohr (10) um mindestens 90° umfasst.

5. Abdichtelement nach einem der Ansprüche 1 bis 4, **dadurch gekennzeichnet, dass** die Öffnung (6) in der Mittelachse eines zylindrischen Teils des Abdichtelementes (1) verläuft.

6. Abdichtelement nach einem der Ansprüche 1 bis 4, **dadurch gekennzeichnet, dass** die Öffnung (6) außerhalb der Mittelachse eines zylindrischen Teils des Abdichtelementes (1), jedoch parallel zur Mittelachse verläuft.

7. Abdichtelement nach einem der Ansprüche 1 bis 6, **dadurch gekennzeichnet, dass** am Ende des Bogenelementes (7) eine Kabel- oder Rohrhalterung (9) vorgesehen ist.

## Claims

1. Sealing member (1) for passing a cable, a protective cable sheath (10) or another line tightly through a wall (11), comprising a base plate (2) and at least one clamping plate (3), a seal member (4) being arranged between the base plate (2) and the at least one clamping plate (3), which seal member can be inserted into a wall opening together with the clamping plate (3) and, once inserted into the wall opening, can be squeezed between the base plate (2) and the clamping plate (3) by means of tie rods (5), and an opening (6) for the cable or protective cable sheath (10) which is to be passed through the wall (11) being provided in the base plate (2), **characterised in that** the base plate (2) is provided laterally with an arced member (7), which comprises a sheath guide (8) and of which the radius (R) is between 5 and 20 times the diameter (d) of the opening (6) of the base plate (2) depending on the cable or protective cable sheath (10) laid therein, said opening (6) leading tangentially into the arced member (7), and the sheath guide (8) being in the form of an arced half-shell which starts inside a part, to be inserted into the wall opening, of the base plate (2).

2. Sealing member according to claim 1, **characterised in that** the arced member (7) is produced together with the base plate (2) in the primary forming process.

3. Sealing member according to claim 1, **characterised in that** the arced member (7) is connected to the base plate (2) as a separate component.

4. Sealing member according to any one of claims 1 to 3, **characterised in that** the sheath guide (8) formed as an arced half-shell is formed in such a way that it encompasses the cable or protective cable sheath (10) over at least 90°.

5. Sealing member according to any one of claims 1 to 4, **characterised in that** the opening (6) extends along the central axis of a cylindrical part of the sealing member (1).

6. Sealing member according to any one of claims 1 to 4, **characterised in that** the opening (6) extends outside the central axis of a cylindrical part of the sealing member (1), but parallel to said central axis.

7. Sealing member according to any one of claims 1 to 6, **characterised in that** a cable holder or sheath holder (9) is provided on the end of the arced member (7).

## Revendications

1. Élément d'étanchéité (1) pour assurer l'étanchéité d'un passe-câble, d'un tube de protection de câble (10) ou de toute autre conduite passant à travers un mur (11), avec une plaque de base (2) et au moins une plaque de serrage (3), sachant qu'entre la plaque de base (2) et la plaque de serrage (3) au moins prévue, est disposé un élément de joint (4), qui, lorsqu'il a été inséré, avec la plaque de serrage (3), dans une ouverture, pratiquée dans le mur, peut être pressé entre la plaque de base (2) et la plaque de serrage (3), au moyen de tiges de serrage (5), et sachant que, dans la plaque de base (2), est pratiquée une ouverture (6) pour le câble ou le tube de protection de câble (10), qui doit être conduit à travers le mur (11), **caractérisé en ce que** la plaque de base (2) est pourvue, latéralement, d'un élément courbe (7), qui est pourvu d'un passe-câble (8), et dont le rayon (R) est 5 fois à 20 fois plus grand que le diamètre (d) de l'ouverture (6) de la plaque de base (2), selon le câble ou le tube de protection de câble (10) posé, sachant que cette ouverture (6) débouche tangentiellement dans l'élément courbe (7), et sachant que le passe-câble (8) est réalisé sous la forme d'une demi-coquille courbe, qui prend son départ à l'intérieur d'une partie de la plaque de base (2) insérable dans l'ouverture du mur.

2. Élément d'étanchéité selon la revendication 1, **caractérisé en ce que** l'élément courbe (7) est fabriqué, en commun avec la plaque de base (2), au cours du processus de moulage primaire.

3. Élément d'étanchéité selon la revendication 1, **caractérisé en ce que** l'élément courbe (7) est relié, en tant que composant séparé, à la plaque de base (2).

4. Élément d'étanchéité selon l'une des revendications 1 à 3, **caractérisé en ce que** le passe-câble (8), réalisée sous la forme d'une demi-coquille courbe, est conçu de sorte qu'il embrasse le câble ou le tube de protection du câble (10) sur au moins 90°.

5. Élément d'étanchéité selon l'une des revendications 1 à 4, **caractérisé en ce que** l'ouverture (6) s'étend dans l'axe central d'une pièce cylindrique de l'élément d'étanchéité (1).

6. Élément d'étanchéité selon l'une des revendications 1 à 4, **caractérisé en ce que** l'ouverture (6) s'étend en dehors de l'axe central d'une pièce cylindrique de l'élément d'étanchéité (1), mais parallèlement audit axe central.

7. Élément d'étanchéité selon l'une des revendications 1 à 6, **caractérisé en ce que**, à l'extrémité de l'élément courbe (7) est prévu un support de câble ou de tube (9).
